# EUROPÄISCHE PATENTSCHRIFT

(11) **EP 0 950 457 B1**
(45) Veröffentlichungstag und Bekanntmachung des Hinweises auf die Patenterteilung: **22.12.2004**
(21) Anmeldenummer: 99102560.2
(22) Anmeldetag: 11.02.1999
(51) Int. Cl.: B23G 5/18

(54) **Gewindefräser**
Thread milling cutter
Fraise de filetage

(30) Priorität: 17.04.1998 DE 19817020
(43) Veröffentlichungstag der Anmeldung: 20.10.1999
(73) Patentinhaber: Schmitt, Norbert M., Dr., D-90537 Feucht (DE)
(72) Erfinder: Schmitt, Norbert M., Dr., D-90537 Feucht (DE)
(74) Vertreter: Meissner, Bolte & Partner

(56) Entgegenhaltungen:
- EP-A- 0 278 930
- EP-A- 0 429 917
- EP-A- 0 733 430
- DE-U- 9 211 669
- GB-A- 623 153
- US-A- 1 795 093

## Beschreibung

Die Erfindung betrifft einen Gewindefräser mit einer Fräserachse.

Bekannt sind Gewindefräser mit einer Fräserachse, die zum Gewindefräsen eine Rotationsbewegung um die Fräserachse, eine Zirkularbewegung und eine Vorschubbewegung machen, wobei die Drehzahl der Rotationsbewegung um ein Mehrfaches größer als die Drehzahl der Zirkularbewegung ist.

Bei einem bekannten (EP-OS 0 429 917) Gewindefräser dieser Art sind in jeder Umfangsebene die Zähne von Zahnreihe zu Zahnreihe gleich ausgebildet. Wenn man hier die einer Umfangsebene zugeordneten Zähne betrachtet, dann sind die Flanken dieser Zähne bzgl. der Mittelachse sämtliche gleich angeordnet. Bei diesem bekannten Gewindefräser spant jeder Zahn stets an beiden Flanken in gleicher Weise. Dadurch entsteht ein V-förmiger Span, der sich durch seinen Querschnitt schlecht vom Werkstück löst und abrollt. Die erforderliche Schnittkraft ist deshalb relativ hoch.

US 1,795,093 offenbart eine Ausgestaltung und Anordnung der Zähne eines Gewindefräsers nach dem Oberbegriff des Anspruchs 1, bei der einander entsprechende Zahnflanken von in einer Umfangebene hintereinander angeordneten Zähnen eine unterschiedliche Neigung aufweisen. Dadurch soll der Schnittwiderstand reduziert werden. Diese Zahnausgestaltung ist allerdings in ihrer Herstellung recht aufwändig.

Aufgabe der Erfindung ist es, einen Gewindefräser zu schaffen, der bei verringerter Schnittkraft Späne erzeugt, die sich gut vom Werkstück lösen, und der einfach herzustellen ist.

Diese Aufgabe wird gemäß der Erfindung durch einen Gewindefräser mit den Merkmalen des Patentanspruchs 1 gelöst

Die Erfindung sieht gemäß Anspruch 1 einen Gewindefräser mit einer Fräserachse vor,
a) der zum Gewindefräsen eine Rotationsbewegung um die Fräserachse, eine Zirkularbewegung und eine Vorschubbewegung macht, wobei die Drehzahl der Rotationsbewegung um ein Mehrfaches größer als die Drehzahl der Zirkularbewegung ist,
b) der beim Gewindefräsen an einem Werkstück Späne einer bestimmten Dicke erzeugt,
c) der mindestens zwei Zahnreihen mit radial über der Fräserachse gleich hohen Zähnen aufweist,
d) wobei mindestens ein, insbesondere jeder, Zahn einer Zahnreihe zusammen mit einem oder mehreren, insbesondere je einem, Zahn der weiteren Zahnreihen einer senkrecht zur Fräserachse liegenden Umfangsebene derart zugeordnet ist, dass jeder dieser Zähne auf einer ersten Seite der Umfangsebene eine erste Zahnflanke und auf einer zweiten, der ersten Seite gegenüberliegenden Seite der Umfangsebene eine zweite Zahnflanke aufweist,
e) wobei jede Zahnflanke bezüglich der jeweiligen Umfangsebene eine bestimmte Position einnimmt derart, dass bei jeder Umfangsebene in Umfangsrichtung gesehen jeweils die erste Flanke des Zahnes einer ersten Reihe relativ zur ersten Flanke des Zahnes einer, insbesondere aller, zweiten benachbarten Reihe(n) in Fräserachsrichtung vorversetzt und/oder die zweite Flanke des Zahnes der zweiten Reihe(n) relativ zur zweiten Flanke des Zahnes der ersten Reihe in Fräserachsrichtung zurückversetzt ist, und
f) wobei sich in Fräserachsrichtung gesehen in jeder Zahnreihe bezüglich der dem äußeren Ende der Zähne zugeordneten Zahnabstände größere Zahnabstände und kleinere Zahnabstände abwechseln.

Aufgrund des bei dem erfindungsgemäßen Gewindefräser vorgesehenen Versatzes der Zahnflanken werden beim Gewindefräsen Späne erzeugt, die vom normalen V-Span soweit abweichen, dass sie besser abrollen bzw. sich vom Werkstück besser lösen. Das Maximum des Versatzes ist durch die Form bzw. Gestalt des Zahnes und die Belastbarkeit des Zahnes bestimmt. Es wird nämlich Spanungsarbeit von der zurückversetzten Flanke des einen Zahnes weggenommen und auf den nachfolgenden Zahn mit der vorversetzten Flanke gelegt.

Da gemäß der Erfindung ferner vorgesehen ist, dass sich in Achsrichtung gesehen in jeder Reihe größere Zahnabstände und kleinere Zahnabstände abwechseln, ist der erfindungsgemäße Gewindefräser relativ einfach herstellbar. Dies wird insbesondere dadurch erreicht, dass bei der Herstellung einander zugewendete Flanken benachbarter Zähne gemeinsam in gleicher Weise abgetragen werden.

Mit anderen Worten betrifft die Erfindung betrifft einen Gewindefräser mit positionierten Zahnflanken, der zum Gewindefräsen eine Rotationsbewegung, eine Zirkularbewegung und eine Vorschubbewegung macht, wobei die Drehzahl der Rotationsbewegung um ein Mehrfaches größer als die Drehzahl der Zirkularbewegung ist, der beim Gewindefräsen an einem Werkstück Späne einer bestimmten Dicke erzeugt, der mindestens zwei Zahnreihen mit gleich hohen Zähnen aufweist, die jeweils zwei Flanken bilden und die jeweils steigungsfrei angeordnet bzw. Umfangsebenen zugeordnet sind, und bei dem jede Flanke bzgl. einer Mittelachse eine bestimmte Position hat. Der erfindungsgemäße Gewindefräser ist dadurch gekennzeichnet, dass bei jeder Umfangsebene in Umfangsrichtung gesehen jeweils eine Flanke des Zahnes einer ersten Reihe relativ zur Flanke des Zahnes der zweiten benachbarten Reihe in Achsrichtung vorversetzt bzw. die Flanke des Zahnes der zweiten Reihe relativ zur Flanke des Zahnes der ersten Reihe zurückversetzt ist und dass bei jedem Zahn die eine Flanke Vorversatz und die andere Flanke Rückversatz bildet, wobei Vorversatz und Rückversatz sich abwechseln.

Besonders zweckmäßig und vorteilhaft ist es, wenn der Versatz zumindest gleich der Dicke der zu erzeugenden Späne ist. In diesem Fall weisen die Späne keinerlei V-Form mehr auf, sondern weisen eine flache Form auf, die sich verbessert vom Werkstück löst.

In der Regel erstreckt sich der Versatz mit gleicher Dicke über die gesamte Höhe bzw. radiale Erstreckung des Zahnes. Es ist aber auch machbar, die Dicke des Versatzes über die Höhe des Zahnes zu ändern, z.B. zum freien Ende des Zahnes hin abnehmen zu lassen. Unter Umständen ist es angebracht, den Versatz nur an einem Teil der Höhe des Zahnes vorzusehen, z.B. das radial äußere Viertel der Zahnhöhe ohne Versatz zu lassen. Die Flanken der Zähne sind wirkungsmäßig versetzt, so dass sie entlang der Umfangsebene abwechselnd von Zahnreihe zu Zahnreihe nicht mehr spanabhebend wirken oder nur einen verminderten Span abheben.

Mit dem erfindungsgemäßen Gewindefräser wird das Vollprofil der Gewinderille bei jeder vollen Rotationsdrehung des Gewindefräsers erzeugt. Beim Arbeiten mit dem erfindungsgemäßen Gewindefräser ist dessen Vorschub der gleiche, wie wenn der Gewindefräser gleichmäßig mit gleichen Zähnen besetzt ist. Die jeweils wirksame Zerspankraft ist vermindert. Das am Gewindefräser beim Fräsen angreifende Biegemoment ist verringert. Der sogenannte Schnittdruck ist vermindert. Bei dem erfindungsgemäßen Gewindefräser sind die einer gemeinsamen Umfangsebene zugeordneten Zähne in Umfangsrichtung gesehen abwechselnd in der Zahnposition und/ oder der Flankenposition verschieden.

In der Zeichnung sind bevorzugte Ausführungsformen der Erfindung dargestellt und zeigt
- Fig. 1: schematisch eine Seitenansicht eines Gewindefräsers mit positionierten Zahnflanken,
- Fig. 2: schematisch eine Abwicklung der Zahnreihen des Gewindefräsers gemäß Fig. 1,
- Fig. 3: schematisch eine Abwicklung der Zahnreihen eines zweiten Gewindefräsers mit positionierten Zahnflanken,
- Fig. 4: eine schematische Schnittdarstellung einer Zahnreihe des Gewindefräsers gemäß Fig. 3,
- Fig. 5: eine schematische Schnittdarstellung einer, der Zahnreihe gemäß Fig. 4 benachbarten Zahnreihe des Gewindefräsers gemäß Fig. 3 und
- Fig. 6: schematisch eine Abwicklung der Zahnreihen eines dritten Gewindefräsers mit positionierten Zahnflanken.

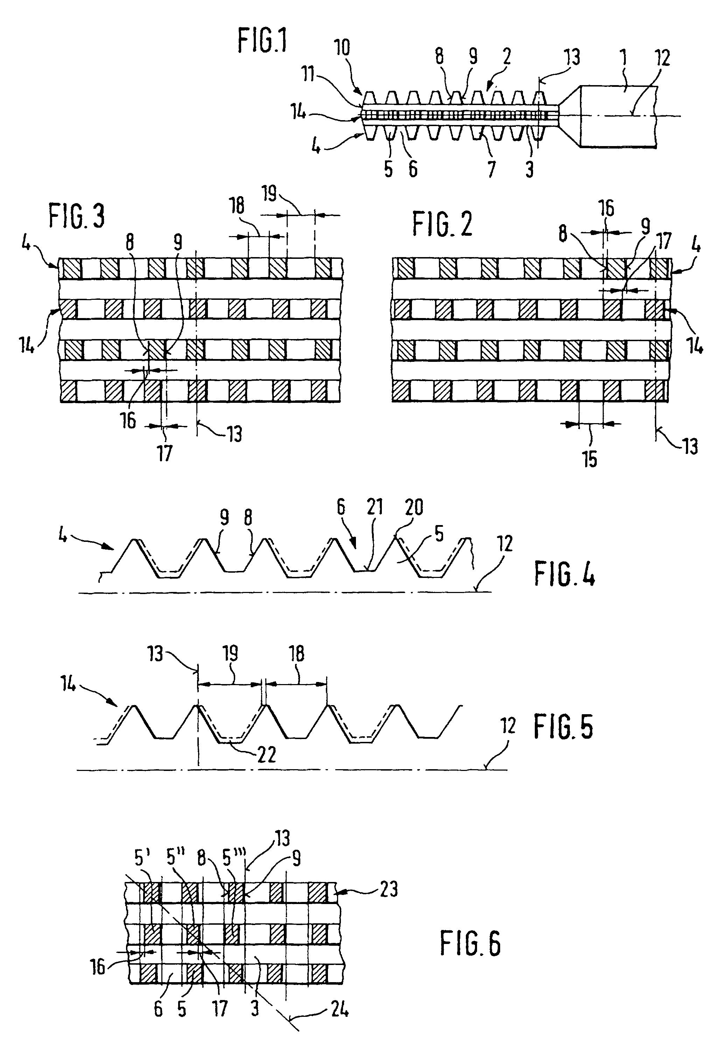

Ein Gewindefräser gemäß Fig. 1 - 5 umfasst einen Aufnahmeschaft 1 zum Einsatz in ein Spannwerkzeug an einer Werkzeugspindel einer Werkzeugmaschine. An den Aufnahmeschaft 1 schließt sich nach vorne hin ein Fräsbereich 2 an, der mit Spannuten 3 versehen ist und vier Reihen 4, 14 von hintereinander angeordneten Zähnen 5 aufweist, wobei die Reihen in Richtung der Spannuten 3 verlaufen. Die Zähne 5 begrenzen zwischen sich je eine Rille 6, bilden Gewindefrässchneiden 7 und sind jeweils von zwei Flanken 8, 9 begrenzt. Der Gewindefräser ist ein Gewindebohrfräs-Werkzeug und läuft nach vorne hin in einem Endstück 10 aus, das mit axialen und radialen Bohrschneiden 11 versehen ist. Dem Gewindefräser ist eine Mittelachse 12 zugeordnet, rechtwinkelig zu der gedachte Umfangsebenen 13 angeordnet sind. Es ist jeweils eine Reihe 4 von Zähnen einer anderen Reihe 14 von Zähnen benachbart und bei den beiden benachbarten Reihen 4, 14 sind die Zähne in Position und/oder Gestalt verschieden.

Gemäß Fig. 1 und 2 sind in beiden Reihen 4, 14, die sich abwechselnd rund um die Mittelachse 12 herum wiederholen, die Zähne 5 jeweils gleich ausgebildet und jeweils zwei einander benachbarte Zähne einer Reihe weisen den gleichen Abstand 15 voneinander auf. Jedoch sind die einer Durchmesserebene 13 zugeordneten Zähne der Reihen nicht symmetrisch zu der Durchmesserebene angeordnet. Vielmehr sind die beiden Reihen 4, 14 gegeneinander in Richtung der Mittelachse 12 versetzt, so dass von zwei einander bzgl. einer Durchmesserebene 13 benachbarten Zähnen der eine einen Vorversatz 16 und der andere einen Rückversatz 17 hat und zwar mit den Flanken 8, 9.

Bei der Ausführungsform gemäß Fig. 3-5 sind in jeder Reihe einander abwechselnd folgend verschiedene Abstände 18, 19 vorgesehen, die sich wiederholen und dem äußeren Ende der Zähne zugeordnet sind. Diese Abstände 18, 19 wechseln in Bezug auf die gleiche Umfangsebene 13 auch von Reihe 4 zu Reihe 14, so dass auch hier ein Vorversatz 16 und ein Rückversatz 17 der Flanken 8, 9 gegeben ist. Fig. 4 und 5 verdeutlichen, dass die Flanken 8, 9 schräg angeordnet sind, jeder Zahn 5 am freien Ende einen Steg 20 bildet und zwischen zwei in der Reihe benachbarten Zähnen die Rille 6 einen Rillengrund 21 bildet. Bei den Rillen 6 mit dem größeren Abstand 19 der beiden rillenbegrenzenden Flanken ist die Rille 6 tiefer, d.h. der Rillengrund 21 radial um ein Maß 22 tiefer im Fräserkern angeordnet.

Die Ausführungsformen gemäß Fig. 1 - 5 weisen jeweils eine gerade Anzahl von Zahnreihen auf. Die Ausführungsform gemäß Fig. 6 weist eine ungerade Anzahl von Zahnreihen auf, nämlich drei Zahnreihen 23. Soweit im nachfolgenden nichts anderes angegeben ist, weist die Ausführungsform gemäß Fig. 6 einen gleichen Aufbau auf wie die Ausführungsformen gemäß Fig. 1 - 5. So ist zwischen zwei benachbarten Zahnreihen 23 jeweils eine Spannut 3 vorgesehen und befindet sich zwischen zwei in einer Zahnreihe benachbarten Zähnen 5 jeweils eine Rille 6. Jeder Zahn 5 weist zwei Flanken 8, 9 auf und ist einer Durchmesserebene 13 zugeordnet. In jeder Zahnreihe 23 bildet jeweils ein erster Zahn 5' einen Vorversatz 16 der in der Zahnreihe benachbarte zweite Zahn 5" einen Vorversatz und einen Rückversatz 17 und der in der Zahnreihe benachbarte dritte Zahn 5''' einen Rückversatz 17. Diese Dreier-Reihenfolge wiederholt sich in der Zahnreihe.

Es sind weiterhin benachbarte Zahnreihen 23 jeweils um einen Zahn gegeneinander versetzt, so dass gleichartige Zähne der Zahnreihen auf einer Schräglinie angeordnet sind; z.B. sind jeweils die Zähne 5" mit sowohl Vorversatz 16 als auch Rückversatz 17 in Fig. 6 auf einer Schräglinie 24 angeordnet. Auch hier ist vorgesehen, dass bei jedem Zahn die eine Flanke Vorversatz und die andere Flanke Rückversatz bildet, wobei Vorversatz und Rückversatz sich abwechseln. So hat der in Fig. 6 in der mittleren Zahnreihe 23 befindliche Zahn 5" an der einen Flanke bzgl. des in der Umfangsebene zugeordneten Zahnes der oberen Reihe Vorversatz und an der anderen Flanke bzgl. des in der Umfangsebene zugeordneten Zahnes der unteren Reihe Rückversatz. Dabei wechseln sich Vorversatz und Rückversatz an diesem Zahn 5" ab.

## Patentansprüche

1. Gewindefräser mit einer Fräserachse,
a) der zum Gewindefräsen eine Rotationsbewegung um die Fräserachse (12), eine Zirkularbewegung und eine Vorschubbewegung macht, wobei die Drehzahl der Rotationsbewegung um ein Mehrfaches größer als die Drehzahl der Zirkularbewegung ist,
b) der beim Gewindefräsen an einem Werkstück Späne einer bestimmten Dicke erzeugt,
c) der mindestens zwei Zahnreihen (4, 14) mit radial über der Fräserachse (12) gleich hohen Zähnen (5) aufweist, **dadurch gekennzeichnet**,
d) dass mindestens ein, insbesondere jeder, Zahn (5) einer Zahnreihe (4) zusammen mit einem oder mehreren, insbesondere je einem, Zahn (5) der weiteren Zahnreihen (14) einer senkrecht zur Fräserachse (12) liegenden Umfangsebene (13) derart zugeordnet ist, dass jeder dieser Zähne (5) auf einer ersten Seite der Umfangsebene (13) eine erste Zahnflanke (8) und auf einer zweiten, der ersten Seite gegenüberliegenden Seite der Umfangsebene (13) eine zweite Zahnflanke (9) aufweist,
e) wobei jede Zahnflanke (8, 9) bezüglich der jeweiligen Umfangsebene (13) eine bestimmte Position einnimmt derart, dass bei jeder Umfangsebene (13) in Umfangsrichtung gesehen jeweils die erste Flanke (8) des Zahnes (5) einer ersten Reihe (4) relativ zur ersten Flanke (8) des Zahnes (5) einer, insbesondere aller, zweiten benachbarten Reihe(n) (14) in Fräserachsrichtung (12) vorversetzt (16) und/oder die zweite Flanke (9) des Zahnes (5) der zweiten Reihe(n) (14) relativ zur zweiten Flanke (9) des Zahnes (5) der ersten Reihe (4) in Fräserachsrichtung zurückversetzt (17) ist, und
f) wobei sich in Fräserachsrichtung (12) gesehen in jeder Zahnreihe (4, 14) bezüglich der dem äußeren Ende der Zähne zugeordneten Zahnabstände (18, 19) größere Zahnabstände (19) und kleinere Zahnabstände (18) abwechseln.

2. Gewindefräser nach Anspruch 1, bei dem der Vorversatz (16, 17) zumindest gleich der Dicke der zu erzeugenden Späne ist.

3. Gewindefräser nach Anspruch 1 oder 2, bei dem der Versatz (16, 17) der Zahnflanken (8, 9) über die gesamte radiale Erstreckung der Zähne (5) im Wesentlichen gleich groß ist.

4. Gewindefräser nach Anspruch 1 oder 2, bei dem der Versatz (16, 17) der Zahnflanken (8, 9) sich entlang der radialen Erstreckung der Zähne (5) verändert.

5. Gewindefräser nach Anspruch 4, bei dem der Versatz (16, 17) der Zahnflanken (8, 9) zum freien Ende der Zahnflanken (8, 9) hin abnimmt.

6. Gewindefräser nach einem der vorhergehenden Ansprüche, bei dem sich in den Zahnreihen (4, 14) die einander abwechselnden größeren Zahnabstände (19) und kleineren Zahnabstände (18) wiederholen.

7. Gewindefräser nach einem der vorhergehenden Ansprüche, bei dem sich in wenigstens einer der Zahnreihen (4, 14) genau ein größerer Zahnabstand (19) und genau ein kleinerer Zahnabstand (18) abwechseln.

8. Gewindefräser nach einem der vorhergehenden Ansprüche, bei dem die Zahnreihen (4, 14) im Wesentlichen parallel zur Fräserachse (12) verlaufen.

9. Gewindefräser nach einem der vorhergehenden Ansprüche, bei dem die ersten Zahnflanken (8) und/oder die zweiten Zahnflanken (9) der einer gemeinsamen Umfangsebene (13) zugeordneten Zähne (5) abwechselnd in Umfangrichtung vor- und zurückversetzt sind.

## Claims

1. A thread milling cutter having a milling axis,
a) which, for milling threads, executes a rotary movement about the milling axis (12), a circular movement and an advancing movement, the speed of the rotary movement being a multiple greater than the speed of the circular movement,
b) which generates cuttings of a certain thickness when milling threads on a workpiece,
c) which has at least two rows of teeth (4, 14) having teeth (5) extending at the same radial height beyond the milling axis (12), **characterised in that**
d) at least one, particularly every, tooth (5) of one row of teeth (4), together with one or more teeth (5), particularly one tooth (5) in each case, of the further row of teeth (14), is associated with a circumferential plane (13) located perpendicularly to the milling axis (12), this association being such that each of these teeth (5) has a first tooth flank (8) on a first side of the circumferential plane (13) and a second tooth flank (9) on a second side of the circumferential plane (13), said second side being opposite the first side,
e) each tooth flank (8, 9) assuming a particular position with respect to the respective circumferential plane (13) in such a way that, for each circumferential plane (13), as seen in the circumferential direction, the first flank (8) of the tooth (5) of a first row (4) is, in each case, offset forwards (16) in the direction of the milling axis (12) relative to the first flank (8) of the tooth (5) of a second adjacent row (14), particularly all second adjacent rows (14), and/or the second flank (9) of the tooth (5) of the second row(s) (14) is offset backwards (17) in the direction of the milling axis relative to the second flank (9) of the tooth (5) of the first row (4), and
f) with respect to the tooth spacings (18, 19) associated with the outer end of the teeth, larger tooth spacings (19) and smaller tooth spacings (18) alternate in each row of teeth (4, 14) as seen in the direction of the milling axis (12).

2. A thread milling cutter according to Claim 1, in which the forward offset (16, 17) is at least the same as the thickness of the cuttings to be generated.

3. A thread milling cutter according to Claim 1 or 2, in which the offset (16, 17) of the tooth flanks (8, 9) is substantially the same size over the entire radial extent of the teeth (5).

4. A thread milling cutter according to Claim 1 or 2, in which the offset (16, 17) of the tooth flanks (8, 9) changes along the radial extent of the teeth (5).

5. A thread milling cutter according to Claim 4, in which the offset (16, 17) of the tooth flanks (8, 9) decreases towards the free end of the tooth flanks (8, 9).

6. A thread milling cutter according to one of the preceding claims, in which the mutually alternating larger tooth spacings (19) and smaller tooth spacings (18) are repeated in the rows of teeth (4, 14).

7. A thread milling cutter according to one of the preceding claims, in which precisely one larger tooth spacing (19) and precisely one smaller tooth spacing (18) alternate in at least one of the rows of teeth (4, 14).

8. A thread milling cutter according to one of the preceding claims, in which the rows of teeth (4, 14) extend substantially parallel to the milling axis (12).

9. A thread milling cutter according to one of the preceding claims in which the first tooth flanks (8) and/or the second tooth flanks (9) of the teeth (5) associated with a common circumferential plane (13) are offset alternately forwards and backwards in the circumferential direction.

## Revendications

1. Fraise de filetage avec un axe de fraisage,
a) qui, pour le filetage à la fraise, effectue un mouvement de rotation autour de l'axe de fraisage (12), un mouvement circulaire et un mouvement d'avance, la vitesse du mouvement de rotation étant supérieure d'un multiple à la vitesse du mouvement circulaire,
b) qui produit des copeaux ayant une épaisseur déterminée sur une pièce à usiner lors du filetage à la fraise,
c) qui comporte au moins deux rangées de dents (4, 14) avec des dents (5) de hauteur similaire dans le sens radial au-dessus de l'axe de fraisage (12), **caractérisée en ce que**
d) au moins une, en particulier chaque, dent (5) d'une rangée de dents (4) conjointement avec une ou plusieurs, en particulier une, dent (5) des autres rangées de dents (14) est associée à un plan circonférentiel (13) placé perpendiculairement à l'axe de fraisage (12) de telle manière que chacune de ces dents (5) comporte un premier flanc de dent (8) sur un premier côté du plan circonférentiel (13) et un second flanc de dent (9) sur un second côté du plan circonférentiel (13) opposé au premier côté,
e) moyennant quoi chaque flanc de dent (8, 9) prend une position déterminée par rapport au plan circonférentiel respectif (13) de telle manière que, dans chaque plan circonférentiel (13) vu dans la direction circonférentielle, le premier flanc (8) de la dent (5) d'une première rangée (4) est décalé vers l'avant (16) par rapport au premier flanc (8) de la dent (5) d'une, en particulier de toutes, deuxième rangée adjacente (14) dans la direction de l'axe de fraisage (12) et/ou le second flanc (9) de la dent (5) de la deuxième rangée (14) est décalé vers l'arrière (17) par rapport au second flanc (9) de la dent (5) de la première rangée (4) dans la direction de l'axe de fraisage, et
f) moyennant quoi, vus dans la direction de l'axe de fraisage (12), des espacements de dents (19) plus grands et des espacements de dents plus petits (18) alternent dans chaque rangée de dents (4, 14) par rapport aux espacements de dents (18, 19) associés à l'extrémité extérieure des dents.

2. Fraise de filetage selon la revendication 1, dans laquelle le déplacement vers l'avant (16, 17) est au moins égal à l'épaisseur des copeaux à produire.

3. Fraise de filetage selon la revendication 1 ou 2, dans laquelle le déplacement vers l'avant (16, 17) des flancs de dents (8, 9) est sensiblement le même sur toute la distance radiale des dents (5).

4. Fraise de filetage selon la revendication 1 ou 2, dans laquelle le déplacement vers l'avant (16, 17) des flancs de dents (8, 9) varie le long de la distance radiale des dents (5).

5. Fraise de filetage selon la revendication 4, dans laquelle le déplacement vers l'avant (16, 17) des flancs de dents (8, 9) diminue en direction de l'extrémité libre des flancs de dents (8, 9).

6. Fraise de filetage selon l'une quelconque des revendications précédentes, dans laquelle les espacements de dents plus grands (19) et les espacements de dents plus petits (18) alternant les uns avec les autres se répètent dans les rangées de dents (4, 14).

7. Fraise de filetage selon l'une quelconque des revendications précédentes, dans laquelle exactement un espacement de dents plus grand (19) et exactement un espacement de dents plus petit (18) alternent dans au moins l'une des rangées de dents (4, 14).

8. Fraise de filetage selon l'une quelconque des revendications précédentes, dans laquelle les rangées de dents (4, 14) s'étendent sensiblement parallèlement à l'axe de fraisage (12).

9. Fraise de filetage selon l'une quelconque des revendications précédentes, dans laquelle les premiers flancs de dents (8) et/ou les seconds flancs de dents (9) des dents (5) associées à un plan circonférentiel commun (13) sont décalés vers l'avant et vers l'arrière en alternance dans la direction circonférentielle.
